# EUROPÄISCHE PATENTANMELDUNG

(11) **EP 4 230 464 A1**
(43) Veröffentlichungstag der Anmeldung: **23.08.2023**
(21) Anmeldenummer: 23157170.4
(22) Anmeldetag: 17.02.2023
(51) Int. Cl.: B60L 3/00, B60L 3/06, B60L 3/08, B60L 3/10, B60L 3/12, B60L 15/20

(54) **VERTEILTES STEUERUNGS- UND SICHERHEITSSYSTEM FÜR EIN KRAFTFAHRZEUG MIT WENIGSTENS EINEM INVERTER UND EIN ENTSPRECHENDES VERFAHREN**

(30) Priorität: 18.02.2022 AT 501092022
(71) Anmelder: hofer powertrain innovation GmbH, 72622 Nürtingen (DE)
(72) Erfinder: Mayr, Johannes, 4550 Kremsmünster (AT)
(74) Vertreter: Cremer & Cremer

(57) **Zusammenfassung**

Ein verteiltes Steuerungs- und Sicherheitssystem 31 für ein Kraftfahrzeug 1 mit einer Eingabevorrichtung für eine Fahrgeschwindigkeit 15 und/oder ein Antriebsmoment entspricht idealerweise einem Mindestsicherheitsniveau wie z. B. ASIL-C oder ASIL-D. Ein erstes Steuergerät 19, 19^{I} als Teil einer Steuerung eines Inverters 33, 35 für einen Elektromotor 13, 13^{I} und ein zweites Steuergerät 21 sind Teil eines Antriebsstrangs des Kraftfahrzeugs. Über wenigstens zwei Kommunikationskanäle 37, 39 ist jeweils eine eigene Stellinformation der Eingabevorrichtung an wenigstens eines der Steuergeräte 19, 19^{I}, 21 übertragbar. Eine Recheneinheit 22, 22', 22" dient der Bestimmung eines ersten elektrischen Leistungsbetriebspunkts 47 für den wenigstens einen Inverter 33, 35 und einem Vergleich mit einem in dem jeweils anderen Steuergerät 21, 19, 19^{I} berechneten zweiten Leistungsbetriebspunkt 49. Unmittelbar nach einer Abweichung zwischen bestimmtem ersten Leistungsbetriebspunkt 47 und verglichenem zweiten Leistungsbetriebspunkt 49 befindet sich das Steuerungs- und Sicherheitssystem 31 in einem Sicherheitszustand, der dem Mindestsicherheitsniveau entspricht.

## Beschreibung

Die vorliegende Erfindung behandelt ein Steuerungs- und Überwachungssystem, das insbesondere Einfluss auf einen Antriebsstrang eines Kraftfahrzeugs nehmen kann, um den Vortrieb des Kraftfahrzeugs mit Hilfe einer Steuerungsdekomposition sicherer zu gestalten.

Des Weiteren behandelt die vorliegende Erfindung ein Verfahren zur Steuerung- und Überwachung eines Kraftfahrzeugs, insbesondere dessen Antriebsstrangs und seinen Vorwärtstrieb.

Mit anderen Worten, die vorliegende Erfindung behandelt ein verteiltes Steuerungs- und Sicherheitssystem nach dem Oberbegriff von Anspruch 1 sowie ein Verfahren, das auf einem verteilten Steuerungs- und Sicherheitssystem nach dem Oberbegriff von Anspruch 8 basiert.

### Technisches Gebiet

Werden Kraftfahrzeuge, insbesondere für eine Personenbeförderung, wie z. B. PKWs, Personentransporter oder Omnibusse, mit Assistenzsystemen ausgestattet, so wird ein besonderes Augenmerk auf die funktionale Sicherheit des oder der Assistenzsysteme gelegt, sofern diese für einen oder mehrere Funktionen des Fahrbetriebs zuständig sein sollen oder zumindest beim Fahren assistieren sollen.

Schon seit mehreren Jahrzenten sind, insbesondere anfänglich für luxuriösere Kraftfahrzeuge, kabelgebundene Steuersysteme wie "By Wire"-Steuerungen, z. B. für Fensterheber, bekannt.

Der Automatisierungsgrad in neueren Kraftfahrzeugen nimmt von Kraftfahrzeuggeneration zu Kraftfahrzeuggeneration kontinuierlich zu und reicht inzwischen bis zur Zurverfügungstellung eines Systems für ein autonomes Fahren des Kraftfahrzeugs auf öffentlichen Straßen. Bei solchen Systemen steht verstärkt die funktionale Sicherheit der elektronischen Systeme im Vordergrund, weil ein autonomes Fahrsystem nicht als Unfallverursacher in Erscheinung treten soll. Üblicherweise soll ein System für ein autonomes Fahren selbsttätig Betriebsfunktionen des Kraftfahrzeugs bestimmen können. Ziel der funktionalen Sicherheitssysteme als Teile von Assistenzsystemen ist es dabei u. a., Gefährdungssituationen, die durch menschliches Fehlverhalten und/oder technische Fehlfunktionen einzelner Teile des Kraftfahrzeuges hervorgerufen werden können, möglichst gar nicht erst eintreten zu lassen.

Diese Problemstellung wird in einem riesigen Fundus an einschlägigen Fachpublikationen und Patentschriften behandelt, von denen viele einen Lösungsansatz in der Systemarchitektur und/oder in der Komponentenauswahl sehen.

Z. B. behandelt ein Aufsatz der Autoren Malakondaiah Naidu et al. mit der Betitelung "Fault-Tolerant Permanent Magnet Motor Drive Topologies for Automotive X-By-Wire Systems", veröffentlicht auf den Seiten 841 bis 848 in IEEE Transactions on Industry Applications, Vol. 46, No. 2, March/April 2010, drei - nach Meinung der Autoren besonders - fehlertolerante Motor-Inverter-Konfigurationen, die auch noch, nachdem ein Fehler eingetreten ist, einen Minimalfunktionsumfang bereitstellen können. Solche Mindestfunktionen werden schlagwortartig auch als "limp home"-Modus bezeichnet. Eines der in dem Fachaufsatz behandelten Antriebssysteme basiert auf einem Dual-Windungs-Motor mit einem dualen Inverter.

Mit fehlertoleranten Architekturen für den Antrieb eines Elektrofahrzeugs setzt sich auch die Masterarbeit von S. Hofer auseinander, die im November 2015 an der Technischen Universität Graz unter der Bezeichnung "Fail-operational architectures for electric propulsion systems" eingereicht wurde. Als Komponenten, die in einem Fehlerfall möglicherweise zu einem Ausfall eines elektrischen Fahrzeugantriebs führen können, werden das Beschleunigungspedal, das allgemeine BUS-System, die zentrale ECU (Electronic Control Unit) des Antriebs, ein Positionsencoder zur Messung des Rotorwinkels einer Motorwelle, eine so genannte "Motronic" bzw. das Steuergerät des Leistungsinverters, der (eigentliche) Inverter zur Versorgung des Stators und der Antriebsmotor genannt. In der Masterarbeit wird der Vorschlag entwickelt, die einzelnen Komponenten - abgesehen von dem Positionsencoder, der einfach vorhanden sein soll, und den Beschleunigungspedalsensoren, die dreifach vorhanden sein sollen - zweifach in dem Fahrzeug bereitzustellen. Bei einem Ausfall des Positionsencoders soll auf aus Statorspannungswerten errechnete Werte der Rotorstellung zur Berechnung in den Steuergeräten zurückgegriffen werden.

In dem Internationalen Standard ISO 26262, Stand 2018, sind Rahmenbedingungen zusammengestellt, bei deren Befolgung eine funktionale Sicherheit möglichst zuverlässig erreicht werden soll. Laut Betitelung der Teil-Norm ISO 26262-9 beschäftigt sich jene Teil-Norm mit "Automotive safety integrity level (ASIL)-oriented and safety-oriented analyses", wobei die Analysen für elektrische und/oder elektronische Systeme, sog. E/E-Systeme, im Hinblick auf die Fehlerausbreitung in zusammengesetzten Systemen durchzuführen sind. Die einzelnen Sicherheitsniveaus bilden sich in den unterschiedlichen ASIL-Stufen ab, von denen mit ASIL-A vergleichsweise niedrige Anforderungen und mit ASIL-B, ASIL-C und ASIL-D sukzessiv höhere Anforderungen spezifiziert werden. In der weiteren Teil-Norm ISO 26262-5 werden u. a. hardwarespezifische Vorgaben für Komponenten in einem Kraftfahrzeug gemacht.

### Stand der Technik

Um die Betriebssicherheit bei Fahrzeugen mit elektronischen Gaspedalen zu steigern, wird in der US 6 345 603 B1 (Inhaberin: Viston Global Technologies, Inc.; Veröffentlichungstag: 12.02.2002) für Systeme, bei denen ein elektronisches Gaspedal zur Steuerung eines Verbrennungsmotors vorhanden ist, vorgeschlagen, die Gaspedalsensordaten in einem Antriebsstrangsteuergerät in Drosselsteuergerätedaten umzuwandeln und über zwei Übertragungskanäle dem gleichen Drosselsteuergerät zuzuleiten. Das Drosselsteuergerät soll mit einem Mikroprozessor, mit einem Speicher und mit einer Software zur Fehlererkennung ausgestattet sein, wobei die Fehlererkennung insbesondere zur Erkennung von Abweichungen zwischen den beiden Kanälen ausgelegt sein soll.

In der DE 102 58 753 A1 (Anmelderin: DaimlerChrysler AG; Offenlegungstag: 22.07.2004) wird ein Datenbussystem beschrieben, mit dessen Hilfe einzelne, modulartig aufgebaute Steuergeräte in einem Verkehrsmittel, die verteilt in unterschiedlichen Einbauräumen eines technischen Produkts vorhanden sein sollen, miteinander kommunizieren können. Die Einzelmodule eines Steuergerätes sollen Daten und Signale zur Ansteuerung der gleichen Komponente (bzw. der gleichen Komponenten und Aktoren wie Elektromotoren oder Stellglieder) erzeugen können und jeweils mit der gleichen Software ausgestattet sein. Als konkretes Anwendungsbeispiel werden Fensterhebemotoren, bzw. allgemeiner gesagt Komponenten des Fahrgastraums, der Türen oder der Spiegel genannt. Das von den Autoren propagierte Gleichteilekonzept soll Reparaturen erleichtern. Die Software soll über den Datenbus aufspielbar sein. Neben dem (reinen) Datenbus kann zusätzlich noch ein Energie-Datenbus zwischen den Modulen vorgesehen sein.

In der US 7 742 852 B1 (Inhaberin: Tesla Motor, Inc.; Veröffentlichungstag: 22.06.2010) wird die Komplexität der Steuerung der Motoren eines elektrischen Allradantriebs unter Einbindung mehrerer Steuergeräte und Sensoren beschrieben. Bei einem solchen System soll die Ausgangsinformation eine Drehmomentenanforderung eines Fahrers sein.

Dem Vorschlag, die Komplexität zu steigern, kann auch dadurch nachgekommen werden, dass komplexere Komponenten zum Einsatz kommen.

Durch die Vereinigung verschiedener Steuerfunktionen in einer Steuerung für ein Kraftfahrzeug meinen die Autoren der US 2014 / 0 222 266 A (Anmelderinnen: KIA Motors Corporation, Hyundai Motor Company; Veröffentlichungstag: 07.08.2014) einen Beitrag zum Umweltschutz durch Integration leisten zu können. Beispielsweise sollen eine Motorsteuerungseinheit, ein Niedervolt-Spannungswandler und eine Hybrid-Steuereinheit zusammengefasst und über einen Zentralprozessor realisiert werden. Ein solches Steuergerät soll dann auch mit anderen Steuergeräten, wie einem Batteriesteuergerät oder einem Getriebesteuergerät, kommunizieren bzw. zusammenarbeiten können. In der von den gleichen Anmelderinnen eingereichten US 2014 / 0 239 712 A1 (Veröffentlichungstag: 28.08.2014) wird zudem die Einbindung des Inverters in ein integriertes Steuerungskonzept beschrieben.

Für die Integration einer Motorsteuerung und einer Fahrzeugsteuerung wird in der CN 106 292 444 A (Anmelderin: SHENZHEN GREATLAND ELECTRICS INC; Veröffentlichungstag: 04.01.2017) die Verwendung eines (Rechen-)Chips mit einem doppelten Kern vorgeschlagen. Mit einer ähnlichen Integration der Steuerung befasst sich die Patentanmeldung CN 106 227 106 A (Veröffentlichungstag: 14.12.2016) der gleichen Anmelderin.

Statt noch höhere Integrationsgrade anzustreben, wird in der US 9 880 911 B2 (Inhaberin: FTS Computertechnik GmbH; Veröffentlichungstag des Patents: 30.01.2018) vorgeschlagen, zur Steigerung der Betriebssicherheit eines autonom agierenden Fahrzeugs die Aufgaben einer zentralen Steuereinheit auf zwei voneinander unabhängige sog. Fehlereingrenzungseinheiten aufzuteilen, die jeweils eine eigenständige Stromversorgung haben, jeweils mit einer eigenen Gruppe von Sensoren verbunden sein sollen und sich gegenseitig überwachen sollen. Diese Einheiten sollen zwar galvanisch getrennt sein, zur Steigerung der Integration aber auf derselben Platine angeordnet sein. Eine dieser Einheiten soll genügen, um bereits einen sicheren Notbetrieb eines Fahrzeugs zu ermöglichen.

Eine ausfallsichere Architektur für ein automatisiertes Fahren ist Thema der US 9 606 537 B2 (Inhaberin: Robert Bosch GmbH; Veröffentlichungstag des Patents: 28.03.2017). Demnach sollen Sensordaten oder Aktuatordaten immer parallel von zwei Computer-Einheiten ausgewertet und auf getrennten Wegen jeweils einzelnen Aktuatoren im Wege ihrer Ansteuerungen zugeführt werden. In der US 9 606 537 B2 wird außerdem in Betracht gezogen, mehrere redundante Sensoren in dem System vorzuhalten, damit die Computer durch einen Vergleich von Daten korrektes Funktionieren gegenprüfen und Fehlfunktionen überprüfen können. Eine gegenseitige Überwachung der Computer kann in einem Ausführungsbeispiel über eine Datenleitungsverbindung zwischen den Computern erfolgen. Außerdem wird in Betracht gezogen, dass ein Aktuator bzw. ein Aktuatorsteuergerät selbst eine Sicherheitssteuerung für den Fall aufweisen kann, dass beide Computer ausfallen. Über die Übernahme von automatischen Fahrfunktionen, wie Bremsen, Beschleunigen und Lenken, sollen sich die vorhandenen Computer miteinander bzw. mit einem Mensch-Maschine-Interface abstimmen können, wenn z. B. einer der Computer eine Fehlfunktion hat.

In der US 2019/0 100 105 A1 (Anmelderin: NIO USA, Inc.; Veröffentlichungstag: 04.04.2019) ist ein fehlerresistenter E-Antriebsstrang als Antrieb eines autonomen Fahrzeugs beschrieben. Die Autoren beschäftigen sich oberflächlich mit der Steuerung auf Grundlage von Signalen aus unterschiedlichen Steuergeräten und zählen ein Sammelsurium möglicher Komponenten auf. In einem ersten "Level" der Steuerung sollen nur die Komponenten "Gas" und "Bremse" autonom von dem Fahrzeug gesteuert werden. In einem fünften "Level" der Steuerung soll das Fahrzeug vollständig autonom arbeiten. Verschiedene Steuergeräte können über einen Bus kommunizieren. Sensorsteuergeräte kommunizieren mit einem Fahrzeugsteuersystem. Mit einem Rechner wird der Antrieb, z. B. der Beschleuniger, gesteuert. Verschiedene Eingabevorrichtungen, wie das Gaspedal, werden in dem Dokument erwähnt. Unter dem Aspekt der Systemsicherheit unter dem Begriff "Automotive Safety Integrity Level (ASIL)" sollen verschiedene im Fahrzeug ohnehin vorhandene Steuergeräte mehrere Steueraufgaben redundant wahrnehmen können, wobei die Steuergeräte selbst jedoch nicht redundant vorhanden sein sollen. Die Steuerbefehle z. B. von drei Steuergeräten können miteinander verglichen werden, um damit einen möglichen Fehler aufzudecken. Bei den Steuergeräten kann es sich z. B. um Inverter-Steuergeräte handeln.

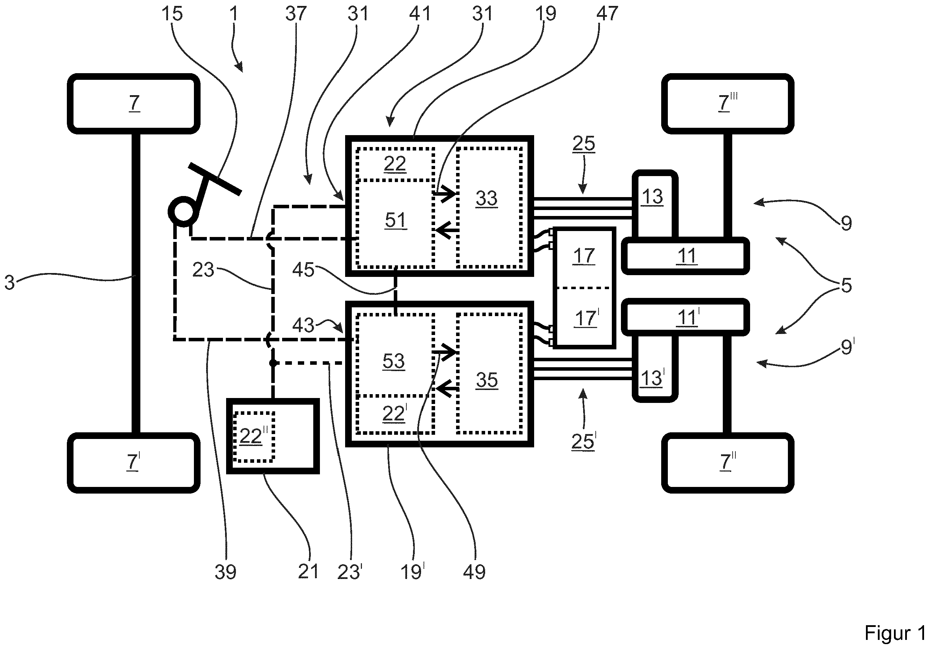

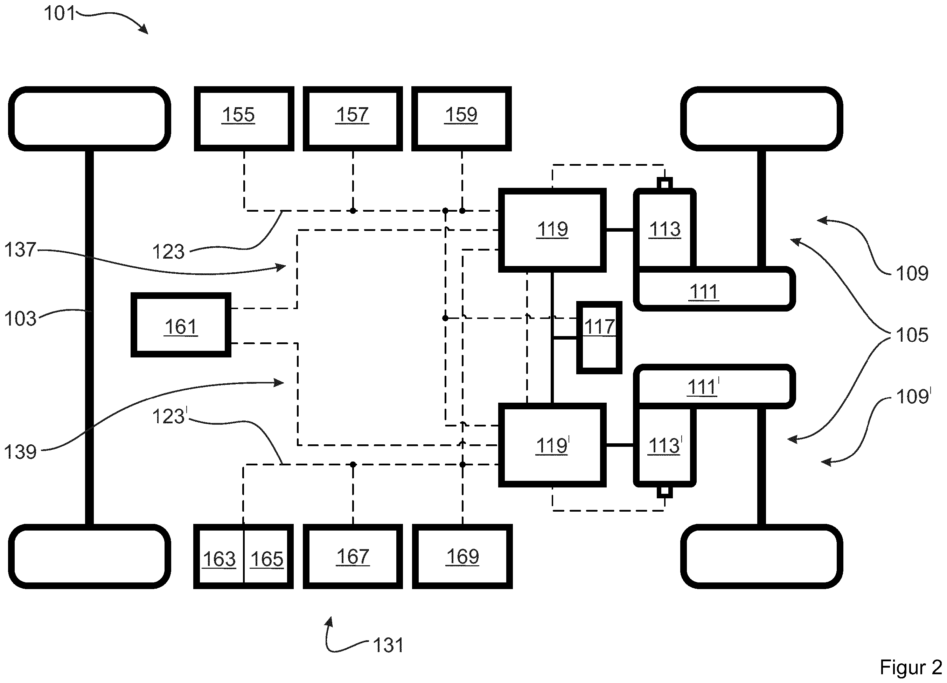

Die US 10 011 262 B2 (Inhaberin: Jaguar Land Rover Limited; Veröffentlichungstag des Patents: 03.07.2018) beschäftigt sich mit einem Antriebsstrang-Kontrollsystem und mit einem Verfahren für ein solches System. Gemäß Figur 1 gibt es zwei Steuerpfade, ein Pfad startet an einem Gaspedal und ein Pfad startet an einer Einheit, die als "Cruise Control" bezeichnet wird. Beide Pfade werden in einer Einheit "Max" zusammengeführt, bei der es sich um einen Komparator handelt, der die im jeweiligen Moment höhere Drehmomentanforderung erkennen soll. Das Antriebsstrang-Steuergerät steuert dann entsprechend einen "Verbrenner" bzw. einen Inverter eines Elektromotors. Die Ansteuerung des Inverters soll "ASIL-C"-gemäß sein. Nach einem zweiten Ausführungsbeispiel, das der Figur 2 der US 10 011 262 B2 zu entnehmen ist, erfolgt ein Vergleich eines Drehmomentanforderungssignals mit einem Drehmomentgrenzwert, um die Anforderung zu validieren, bevor der Elektromotor angesteuert wird.

Weitere interessante Aspekte elektrischer Antriebe sind in der EP 3 348 434 A1 (Anmelderin: Siemens Aktiengesellschaft; Veröffentlichungstag: 18.07.2018), in der EP 3 699 016 A1 (Anmelderin Audi AG; Veröffentlichungstag: 26.08.2020), in der EP 3 496 260 A1 (Anmelderin: Valeo Siemens eAutomotive Germany GmbH; Veröffentlichungstag: 12.06.2019), in der US 2019 / 0 296 665 A1 (Anmelderinnen: Toyota Jidosha Kabushiki Kaisha und Denso Corporation; Veröffentlichungstag: 26.09.2019) und in der DE 10 2011 051 623 A1 (Anmelderin: INNOMAN GmbH; Offenlegungstag 10.01.2013) beschrieben.

In einem als Konferenzbeitrag auf der Online-Plattform "ResearchGate" am 17. Oktober 2017 eingestellten Aufsatz (Conference Paper, October 2013; DOI: 10.1109/IEVC.2013.6681152) der Autoren Stephan Sommer et al. mit der Bezeichnung "RACE - A Centralized Platform Computer Based Architecture for Automotive Applications" wird eine Systemarchitektur für eine von sicherem Datenverkehr abhängige Steuerung eines Kraftfahrzeugs, z. B. für ein Fahrerassistenzsystem, beschrieben. Ein besonderes Augenmerk wird auf die Energieversorgungssicherheit für die Kommunikationsnetzwerke gelegt, die zweifach ausgelegt sein sollen und der Norm ISO 26262-3 in Bezug auf den Sicherheitsstandard ASIL-D hinsichtlich der Ausfallsicherheit genügen sollen. In Figur 2 (a) ist gezeigt, dass eine "Pedal-Box(r)" und eine "Pedal-Box(b)" jeweils über einen Schalter mit einem Fahrzeugsteuercomputer als zentraler Plattform-Computer verbunden sein sollen. Von einem der Schalter soll außerdem eine Verbindung zu einer "ECU" einer der jeweils an den Rädern angeordneten Elektromotoren vorhanden sein. Die Topologie des "Ethernet"-Kommunikationsnetzwerks der Steuerung geht aus Figur 2(b) hervor. Die Kommunikationsknoten der jeweiligen Steuercomputer sollen in zwei Datenübertragungsringe eingebunden sein. Ein innerer Ring dient der Anbindung der verschiedenen Fahrzeugsteuercomputer (VCC) mit dem zentralen Plattform-Computer. Ein äußerer Ring ist für die Kommunikation der "Aggregate" untereinander vorgesehen. Informationen solle auf einem Ring jeweils in die entgegengesetzten Richtungen als Doppel gesendet werden. Wird bei einem Empfang der Daten eine Abweichung der auf diesem Weg erhaltenen Information festgestellt, werden die Daten des jeweiligen Doppels verworfen und es werden die auf dem anderen Pfad empfangenen Daten stattdessen weiter verwendet.

Aus einem unter der Internet-Adresse "https://www.allaboutcircuits.com" eingestellten, online abrufbaren Aufsatz mit der Bezeichnung "Dual Inverter drive for light electric vehicles - a design study" mit der Dokumentenbezeichnung "2020 04_30 AVS_Infineon_IM_Dual_Inverter Whitepaper", für den "Avnet Silica" und "ideas & Motion s.r.l." verantwortlich zeichnen, geht ein Dual-Inverter hervor, der eine Steuerplatine, mit einer Sicherheitssteuerlogik ausgestattet, aufweisen soll, die zwei Inverter-Steuerkerne und einen VMU-Kern (die Abkürzung "VMU" steht für "Vehicle Management Unit") umfasst, wobei die VMU-Einheit die Fahrereingaben, u. a. eine Gaspedalstellung, überwachen soll.

Die zuvor genannten Druckschriften bzw. Veröffentlichungen gelten mit ihrer Benennung als vollumfänglich in vorliegende Erfindungsbeschreibung inkorporiert. Hierdurch soll vermieden werden, nicht mehr erneut und wiederholt allgemein bekannte Zusammenhänge zwischen Sicherheitsniveau, Sicherheitsanforderungen, Redundanz und Kommunikationsarchitektur zu erörtern, sondern durch Verweis auf die Druckschriften als ebenfalls definiert für vorliegende Erfindung ansehen zu dürfen.

Als ein Resümee kann festgehalten werden, dass viele Dokumente den Vorschlag unterbreiten, Sicherheit durch Komplexität und Redundanz herzustellen. Viele Abhandlungen und Patentanmeldungen wollen den Aufwand steigern, um durch doppeltes oder teilweise sogar dreifaches Vorhalten einzelner Geräte und Funktionen ein weiteres Gerät oder eine weitere Instanz zu haben, wenn irgendwo ein Ausfall eines Geräts oder eine Fehlfunktion eingetreten sein sollte.

### Aufgabenstellung

Ziel ist es, ein sicheres, dennoch einfaches Steuerungs- und Sicherheitssystem für ein elektrisch getriebenes Kraftfahrzeug aufzeigen zu können, das insbesondere die Komplexitätsanforderungen der aus der Literatur bekannten Steuersysteme unterschreiten kann. Wünschenswert wäre es daher, ein Konzept zu kennen, bei dem die Systemkomplexität nicht durch eine immer größere Anzahl an komplexeren Steuergeräten gesteigert wird. Trotzdem sollte ein entsprechend realisiertes Antriebssystem zu einem ausreichend sicheren elektrischen Antriebssystem führen.

### Erfindungsbeschreibung

Die erfindungsgemäße Aufgabe wird durch ein Steuerungs- und Sicherheitssystem nach Anspruch 1 gelöst, ein geeignetes Betriebsverfahren lässt sich Anspruch 8 entnehmen. Vorteilhafte Weiterbildungen lassen sich den abhängigen Ansprüchen entnehmen.

In einem Kraftahrzeug, insbesondere für die Personenbeförderung wie einem Pkw oder einem Omnibus, sind üblicherweise zahlreiche Steuergeräte, allgemeiner ausgedrückt Steuerungsaufgaben wahrnehmende Geräte, verbaut, die zum einen für die Fahrsicherheit oder den Fahrkomfort zuständig sind und die zum anderen für die Unterhaltung der Passagiere bzw. für die Informationsvermittlung an die Passagiere zuständig sind. Während es für die Geräte, die Aufgaben der Passagierunterhaltung und der Informationsübermittlung an die Passagiere wahrnehmen, weniger wichtig ist, dass die Geräte permanent fehlerfrei funktionieren, dürfen Geräte, die Aufgaben des eigentlichen Fahrbetriebs übernehmen, möglichst keinerlei Fehleranfälligkeit oder Fehlfunktionen zeigen. Aus diesem Grund werden Geräte und Funktionen zur Steuerung der Bewegung des Kraftfahrzeuges mit Sicherheitssystemen ausgestattet und üblicherweise mehrfach oder verteilt, insbesondere sich gegenseitig überwachend, in der Systemarchitektur des Kraftfahrzeuges platziert.

Für Antriebsstränge in Kraftfahrzeugen eignen sich unterschiedlichste Motorenkonzepte; ein besonders interessantes Konzept basiert auf einem oder mehreren Elektromotoren, die ihre Antriebsenergie aus einem elektrochemischen Speicher oder einem elektrochemischen Konverter beziehen, z. B. aus einem Akkumulator oder z. B. aus einem Brennstoffzellensystem, einem System also, das sozusagen on-board des Kraftfahrzeuges mitgeführt wird. Der elektrochemische Speicher bzw. der elektrochemische Konverter stellt die elektrische Energie für den Betrieb des einen oder der mehreren Elektromotoren, die Teil des Antriebsstranges des Kraftfahrzeugs sind, bedarfsabhängig und insbesondere dosiert zur Verfügung.

Das Steuerungs- und Sicherheitssystem hat also unter anderem die Aufgabe, die elektrische Energie in solchen Leistungen bzw. Leistungspaketen dem einen oder den mehreren Elektromotoren zur Verfügung zu stellen, wie die gewünschte Fahrsituation des Kraftfahrzeuges es zu einem bestimmten Moment erfordert.

Zur Eingabe, mit welcher Fahrgeschwindigkeit ein Kraftfahrzeug sich vorwärts bewegen soll (in diesem Sinne wird auch eine Rückwärtsfahrt als Vorwärtsbewegung angesehen) oder mit welcher Leistung einem Straßenverlauf gefolgt werden soll, sind unterschiedlichste Eingabevorrichtungen bekannt. Seit vielen Jahrzehnten werden Kraftfahrzeuge mit einem Fahrpedal ausgestattet, sodass ein Fahrer des Kraftfahrzeuges über seine Fußstellung dem Kraftfahrzeug mitteilen kann, welche Leistung von dem einen oder den mehreren Betriebsmotoren gewünscht wird. Die Fahrpedale reagieren üblicherweise unverzüglich. Die der Stellgröße "Fahrpedal" folgende Motorsteuerung soll möglichst verzögerungsfrei der gerade im Moment geltenden Fahrpedalstellung folgen (maximale Verzögerung: 50 ms - d. h. kleinere Reaktionszeit als 50 ms für das Antriebsaggregat bei einer Veränderung der Fußpedalstellung). Solche Fahrpedale geben aufgrund ihrer Stellung häufig ein Antriebsmoment vor. Eine Lage bzw. Position des Pedal ist momentenproportional. Je nach Position des Fahrpedals bestimmt sich eine Momentenanforderung (was indirekt einer Leistungsanforderung entspricht). Bei solchen Abhängigkeiten kann ein Fahrpedal auch als eine Antriebsmomenteneingabevorrichtung bezeichnet werden. Längerfristige bzw. über längere Phasen konstante Vorgaben liefernde Fahrgeschwindigkeitseingabevorrichtungen sind häufig Fahrbetätigungshebel oder elektrische sowie elektronische Geschwindigkeitssteuerungen (z. B. in einem landwirtschaftlichen Arbeitsgerät wie einem Traktor), bei denen ein Fahrer eine Soll-Geschwindigkeit vorgeben kann, die das Kraftfahrzeug möglichst befolgen soll, sofern nicht übergeordnete Sicherheitssysteme, z. B. durch ein Bremsen oder Verzögern, gegen die vorgegebene Fahrgeschwindigkeit einwirken (z. B. ein LIDAR zur Abstandssteuerung). Autonom fahrende Fahrzeuge sind vorteilhafterweise solche, die auch eine Geschwindigkeitssteuerung haben, bei denen aber eine unmittelbare Eingabe des Fahrers über längere Zeiträume nicht mehr benötigt wird. Derartige Systeme sind in der Entwicklung, die es einem Fahrer erlauben, eine Soll-Geschwindigkeit für unterschiedliche Straßentypen und Straßenverläufe vorzugeben, z. B. eine Regelgeschwindigkeit von 130 km/h auf weniger dicht befahrenen Autobahnen, die aber danach den Fahrer veranlassen sollen, von unmittelbarer Einflussnahme in die elektronische Steuerung Abstand zu nehmen.

Sicherheitssysteme lassen sich in Übereinstimmung mit Normen wie ISO 26262, z. B. in der Fassung des Jahres 2018, in unterschiedliche Sicherheitsniveaus einteilen. So werden die Niveaus (siehe auch die Beschreibungseinleitung) in Mindestsicherheitsniveaus unterteilt, die z. B. durch die Begriffe ASIL-A, ASIL-B, ASIL-C und ASIL-D eingeteilt werden können.

Wie gesagt, ein Kraftfahrzeug ist üblicherweise mit einer ganzen Reihe von Steuergeräten ausgestattet. Somit kann ein Steuergerät als ein erstes Steuergerät ausgewählt werden, während ein anderes Steuergerät als das dazugehörige zweite Steuergerät bezeichnet werden kann. Als erstes Steuergerät eignet sich insbesondere ein Inverter-Steuergerät in einem elektrisch angetriebenen Fahrzeug.

Das Fahrzeug umfasst einen Inverter, über den der Elektromotor mit elektrischer Energie, z. B. aus dem Akkumulator, versorgt werden kann. Der Inverter ist dazu bestimmt, die Ansteuerung des ihm zugeordneten Elektromotors vorzunehmen.

Das Steuerungs- und Sicherheitssystem besitzt wenigstens zwei Kommunikationskanäle, über die jeweils eine eigene Stellinformation der Fahrgeschwindigkeitseingabevorrichtung oder der Momenteneingabevorrichtung an wenigstens eines der Steuergeräte übertragbar ist. Hat der eine Kanal eine Störung, so kann noch immer eine Stellgröße über den anderen Kanal an ein erstes Steuergerät gelangen. Ist z. B. der Messaufnehmer des einen Kanals im Fahrpedal gestört, so kann über den Messaufnehmer des Fahrpedals für den anderen Kanal noch weiterhin eine Stellgröße für die Fahrgeschwindigkeit bzw. die Fahrleistung erfasst werden.

Jedes der beiden Steuergeräte ist derart gestaltet, dass es einen Eingang umfasst, über den das jeweilige Steuergerät von wenigstens einem der Kommunikationskanäle eine der Stellinformationen der Fahrgeschwindigkeitseingabevorrichtung oder eine der Stellinformationen der Momenteneingabevorrichtung aufnehmen kann.

Außerdem gehört zu dem jeweiligen Steuergerät eine Recheneinheit. Die Recheneinheit in dem ersten Steuergerät ist für eine Bestimmung eines ersten elektrischen Leistungsbetriebspunkts für den wenigstens einen Inverter gestaltet.

Außerdem ist ein erstes Steuergerät in der Lage, für einen Vergleich mit einem in dem jeweils anderen Steuergerät (anderes erstes Steuergerät oder zweites Steuergerät) berechneten zweiten Leistungsbetriebspunkt einen Abgleich zwischen den Steuergeräten durchzuführen. Wird bei einem solchen Abgleich eine Abweichung zwischen bestimmtem ersten Leistungsbetriebspunkt und verglichenem zweiten Leistungsbetriebspunkt festgestellt, so wechselt das Steuerungs- und Sicherheitssystem in einen Sicherheitszustand. Anschließend verbleibt es, zumindest eine Mindestzeit, in dem Sicherheitszustand. Vorteilhafterweise sollte der Sicherheitszustand dem Mindestsicherheitsniveau entsprechen.

In einem zuvor beschriebenen System kann ein Verfahren zu Steuerung eines Antriebsstrangs des Kraftfahrzeugs ablaufen.

Wie zuvor schon angesprochen, hat so ein Kraftfahrzeug wenigstens einen Elektromotor, wenigstens einen Inverter, wenigstens einen elektrochemischen Speicher oder einen elektrochemischen Konverter, wenigstens ein erstes Steuergerät und wenigstens ein zweites Steuergerät. Sowohl das erste Steuergerät als auch das zweite Steuergerät können auch mehrfach in zueinander ähnlicher Weise Teil des Kraftfahrzeugs sein.

Eine Berechnung eines Leistungsbetriebspunkts, insbesondere von einem Elektromotor, erfolgt durch eine Dekomposition von sicherheitsrelevanten Berechnungsschritten auf das erste Steuergerät und auf das zweite Steuergerät in einem ersten Schritt. Anschließend erfolgt eine Komposition zweier Einzelbetriebspunkte in ein den Leistungsbetriebspunkt übertragendes Steuersignal. Das Steuersignal kann z. B. durch ein CAN-Bus-Telegramm übertragen werden. Das Steuersignal ist vorteilhafterweise für den Inverter bestimmt.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Ein Vorteil ist insbesondere in dem Fall gegeben, in dem jedes Steuergerät des Steuerungsund Sicherheitssystems ein Sicherheitsniveau einhält, das niedriger angesiedelt ist als das Mindestsicherheitsniveau des verteilten Steuerungs- und Sicherheitssystems.

Das Steuerungs- und Sicherheitssystem kommt ohne zentrales Fahrzeugsteuergerät aus. Das Steuerungs- und Sicherheitssystem ist durch mehr als zwei Steuergeräte aufgebaut, wobei vorteilhafterweise aber kein Fahrzeugsteuergerät hierfür genutzt wird. Zwei Steuergeräte bilden zusammen das Steuerungs- und Sicherheitssystem, das keine übergeordnete Steuergeräteinstanz, z. B. durch ein Hauptfahrzeugsteuergerät, aufweist.

In dem Steuerungs- und Sicherheitssystem als Ganzes kann in einer vorteilhaften Ausgestaltung der Sicherheitszustand des Mindestsicherheitsniveaus herbeigeführt werden.

Das Elektrofahrzeug kann unterschiedlich aufgebaut werden. Ein Antriebskonzept sieht vor, dass zwei Elektromotoren vorhanden sind. Jeder Elektromotor treibt ein Rad einer Achse an. Es handelt sich in dem Fall um ein Einzelradantriebskonzept bzw. um ein Einzelradantriebssystem. Idealerweise hat jeder Antrieb einen eigenen Inverter. Somit gibt es einen zweiten Inverter, der ebenfalls zu dem Steuerungs- und Sicherheitssystem gehört. Wird der zweite Inverter aber durch ein eigenes Steuergerät gesteuert, so ist die Ausfallsicherheit erhöht.

Vorzugsweise sind beide Elektromotoren, insbesondere zwei der gleichen Achse zugeordnete Elektromotoren von gleicher Bauart. Es ist möglich den oder die Motor(en), die einer ersten Achse zugeordnet sind, mit einer höheren Leistungsklasse auszustatten als den oder die Motoren, die einer zweiten Achse zugeordnet sind. Steuergeräte sind jeweils für eine Motorbauart, insbesondere aufgrund ihrer Programmierung geeignet. Eine vorteilhafte Motorbauart für einen Antriebsstrang ist ein Synchronmotor. Eine vorteilhafte Fahrdynamik kann aber auch durch einen Asynchronmotor realisiert werden.

Mit anderen Worten, in einer vorteilhaften Weiterbildung ist der Antriebsstrang eigentlich entweder ein zusammengesetzter Antriebsstrang aus zwei Einzelradantrieben oder ein Antriebsstrang für einen Achsantrieb.

Einer der Vorteile besteht darin, dass aus einem großen Fundus zweiter Steuergeräte das geeignete Steuergerät für den Anteil des Steuerungs- und Sicherheitssystems ausgewählt werden kann, der auf dem zweiten Steuergerät laufen soll, bzw. auf die gewünschte Rechenkapazität abgestellt werden kann, die für den Anteil des Steuerungs- und Sicherheitssystems benötigt wird. Ist der für das zweite Steuergerät vorgesehene Programmcode rechenintensiv, so wird vorzugsweise ein leistungstärkeres Steuergerät genommen. Zur Auswahl stehen - neben weiteren Steuergeräten - solche Steuergeräte wie ein (zentrales) Fahrzeugsteuergerät, ein (zweites) Invertersteuergerät, ein Hochspannungssteuergerät, ein Batterie-Management-Steuergerät (BMS), ein Body-Control-Unit-Steuergerät, ein Fahrkomfort-Steuergerät, ein Elektromotorsteuergerät, ein Gaspedalsteuergerät und ein Fensterhebersteuergerät. Solche Steuergeräte werden in der Regel mit unterschiedlich starken Rechenkernen ausgestattet.

Die zuvor dargelegten Zusammenhänge und Besonderheiten können mit anderen Worten auch wie folgt erläutert werden.

Das Steuerungs- und Sicherheitssystem kann normungskonform, z. B. in Übereinstimmung mit ISO 26262, realisiert werden, indem eine verteilte Sicherheitsfunktion auf mehreren Steuergeräten abläuft. Wenigstens zwei Steuergeräte überwachen sich gegenseitig. Gibt es z. B. zwei erste Steuergeräte, dann kann das Steuerungs- und Sicherheitssystem auch so aufgebaut sein, dass drei Steuergeräte, nämlich zwei erste Steuergeräte und ein zweites Steuergerät, sich gegenseitig überwachen. Die Überwachung erfolgt vorzugsweise bidirektional. Die Sicherheitsintegrität wird in einer Abarbeitungsphase durch eine Dekomposition erzielt. Ein Sicherheitszustand des Antriebsstrangs kann eingenommen werden, wenn eines der Steuergeräte die Einnahme des Sicherheitszustands als adäquate Reaktion berechnet hat.

Mit anderen Worten, es handelt sich um eine redundante Aufteilung hoher Sicherheitsanforderungen, die an den Antriebsstrang eines Kraftfahrzeuges gestellt werden, auf voneinander unabhängige Instanzen. Diese Dekomposition erfolgt vor dem Hintergrund einer Reduzierung der Integrität der redundanten Sicherheitsanforderung an die einzelnen Instanzen (z. B. an die einzelnen Steuergeräte).

In einer Ausgestaltung können die hohen Sicherheitsanforderungen, die an den Antriebsstrang eines Kraftfahrzeugs, z. B. aufgrund gesetzlicher Vorgaben, zu stellen sind, so auf zwei vorhandene Inverter (bzw. ihre Steuergeräte) verteilt werden, dass jeder Inverter (bzw. sein Steuergerät) für sich nur im Vergleich zu der Gesamtsicherheitsanforderung geringere Sicherheitsanforderungen erfüllt. Die Sicherheitsanforderung eines Steuergeräts ist niedriger als die an das Gesamtsystem, insbesondere wenn es als Ausgangsanforderung betrachtet wird. Das Gesamtsystem genügt aber trotzdem noch den ursprünglich hohen Sicherheitsanforderungen.

Es kann auch gesagt werden, das System wird durch ein Hinzufügen von Redundanz sicherer gemacht, obwohl die Komplexität der Absicherung für die einzelnen Komponenten abnimmt.

Wird das Beispiel mit den beiden Invertern erneut aufgegriffen, so kann eine praktikable Umsetzung darin bestehen, dass ein redundantes Signal des Gaspedales (aufgrund von zwei Kommunikationskanälen "Line A" und "Line B") je von einem Steuergerät eingelesen und verarbeitet wird. Jedes Steuergerät stellt z. B. via CAN, allgemeiner ausgedrückt, über einen Datenbus, dem anderen Steuergerät seine Interpretation der Gaspedalstellung zur Verfügung und vergleicht die Interpretation des jeweils anderen Steuergeräts mit der eigenen Interpretation. Stellt eines der beiden Steuergeräte während des Vergleichs eine unzulässige Abweichung fest, wird via CAN und einer "Safety Line" ein sicherer Zustand in dem Steuerungsund Sicherheitssystem ausgelöst.

Aspekte der vorliegenden Erfindung können mit anderen Worten auch wie folgt beschrieben werden. Ein verteiltes Steuerungs- und Sicherheitssystem für ein Kraftfahrzeug (KFZ) mit einer Eingabevorrichtung für eine Fahrgeschwindigkeit und/oder ein Antriebsmoment entspricht idealerweise einem Mindestsicherheitsniveau wie z. B. ASIL-C oder ASIL-D. Ein erstes Steuergerät als Teil einer Steuerung eines Inverters für einen Elektromotor und ein zweites Steuergerät sind Teil eines KFZ-Antriebsstrangs. Über wenigstens zwei Kommunikationskanäle ist jeweils eine eigene Stellinformation der Eingabevorrichtung an wenigstens eines der Steuergeräte übertragbar. Eine Recheneinheit dient der Bestimmung eines ersten elektrischen Leistungsbetriebspunkts für den wenigstens einen Inverter und dient einem Vergleich mit einem in dem jeweils anderen Steuergerät berechneten zweiten Leistungsbetriebspunkt. Unmittelbar nach einer Abweichung zwischen bestimmtem ersten Leistungsbetriebspunkt und verglichenem zweiten Leistungsbetriebspunkt befindet sich das Steuerungs- und Sicherheitssystem in einem Sicherheitszustand, der dem Mindestsicherheitsniveau entspricht. In einem Verfahren zur Steuerung eines Antriebsstrangs kann eine Dekomposition von sicherheitsrelevanten Berechnungsschritten u. a. auf ein erstes Steuergerät und auf ein zweites Steuergerät erfolgen, mit anschließender Komposition von z. B. zwei oder drei Einzelbetriebspunkten in ein den Leistungsbetriebspunkt übertragendes Steuersignal.

Weil eine Verarbeitung und Plausibilisierung redundant auf zwei Steuergeräten erfolgt, sind die Sicherheitsanforderungen an jedes einzelne Steuergerät geringer im Vergleich mit einer Plausibilisierung, die in üblicher Weise in nur einem Steuergerät stattfinden würde.

Das Beispiel anhand der redundanten Aufteilung der Sicherheitsanforderungen an das Einlesen und Interpretieren des Gaspedales ist nur eine von vielen Sicherheitsfunktionen, die in einem dezidierten Fahrzeugsteuergerät (VCU - "vehicle control unit") umgesetzt wird und die bei der sich aus den zuvor dargelegten Betrachtungen ergebende Methode auf zwei Inverter verteilt wird.

Ein interessanter Aspekt besteht also nicht nur in der Aufteilung der Sicherheitsfunktionen für das Einlesen und Interpretieren des Gaspedales, sondern in der Aufteilung aller Sicherheitsfunktionen, die in einer (sogenannten) VCU typischerweise vertreten sind.

Innerhalb des Antriebsstranges kann also ein Ersatz für die VCU unternommen werden. Idealerweise kann die VCU gänzlich entfallen.

Die zuvor dargestellten Kombinationen und Ausführungsbeispiele lassen sich auch in zahlreichen weiteren Verbindungen und Kombinationen betrachten.

So ist es möglich, nur mit einem einzigen Antriebsstrang, der eine Antriebsleistung auf eine Fahrzeugsachse bringt, das Fahrzeug zu bewegen.

Anstelle von zwei miteinander kommunizierenden Steuergeräten können auch drei oder vier Steuergeräte die Sicherheitsfunktion übernehmen.

Ein Vorteil ergibt sich dadurch, dass z. B. nicht genutzte Rechenkapazitäten in sonstigen Steuergeräten genutzt werden können, indem Teile des Steuerungs- und Sicherheitssystems auf ein solches, nur teilweise genutztes Steuergerät übertragen sind.

### Figurenkurzbeschreibung

Die vorliegende Erfindung kann noch besser verstanden werden, wenn Bezug auf die beiliegende Figur genommen wird, die beispielhaft eine besonders vorteilhafte Ausgestaltungsmöglichkeit darlegt, ohne die vorliegende Erfindung auf diese einzuschränken, wobei
Figur 1 in schematischer Darstellung ein Kraftfahrzeug mit einem erfindungsgemäßen Steuerungs- und Sicherheitssystem zeigt,
Figur 2 in schematischer Darstellung ein Kraftfahrzeug mit einem erfindungsgemäßen Steuerungs- und Sicherheitssystem zeigt,
Figur 3 in schematischer Darstellung ein Kraftfahrzeug mit einem erfindungsgemäßen Steuerungs- und Sicherheitssystem zeigt,
Figur 4 in schematischer Darstellung ein Kraftfahrzeug mit einem erfindungsgemäßen Steuerungs- und Sicherheitssystem zeigt,
Figur 6 in schematischer Darstellung ein Kraftfahrzeug mit einem erfindungsgemäßen Steuerungs- und Sicherheitssystem zeigt,
Figur 7 in schematischer Darstellung ein Kraftfahrzeug mit einer erfindungsgemäßen Steuerung eines Antriebsstrangs zeigt und
Figur 8 in schematischer Darstellung ein Kraftfahrzeug mit einem erfindungsgemäßen Steuerungs- und Sicherheitssystem, das ein Kühlsystem umfasst, zeigt.

### Figurenbeschreibung

Figur 1 zeigt schematisch ein Kraftfahrzeug 1, das u. a. anhand seiner Räder 7, 7^{I}, 7^{II}, 7^{III} an den beiden Achsen 3, 5 als vierrädriges Personenkraftfahrzeug zu erkennen ist. Das Kraftfahrzeug 1 hat zwei Antriebsstränge 9, 9^{I}. Die Antriebsstränge 9, 9^{I} besitzen jeweils einen eigenen Elektromotor 13, 13^{I}, dessen Drehgeschwindigkeit durch eine Stellung eines Fahrpedals 15 bestimmt wird. Die Elektromotoren 13, 13^{I} beziehen ihre elektrische Energie aus zwei elektrochemischen Speichern 17, 17^{I}. Wie die beiden Elektromotoren 13, 13^{I} zu betreiben sind, bestimmen zwei erste Steuergeräte 19, 19^{I}. Daneben gibt es zumindest noch ein zweites Steuergerät 21. Die Motoren 13, 13^{I} sind hochdrehende Motoren, die schneller drehen als für einen Vortrieb in einem Kraftfahrzeug notwendig ist. Die Motoren 13, 13^{I} können z. B. dazu ausgelegt sein, eine reguläre Vortriebsgeschwindigkeit des Kraftfahrzeugs 1 bei einer Umdrehung in einem Drehzahlbereich zwischen 12.000 U/min (Umdrehungen pro Minute) und 20.000 U/min zu erzeugen. Die Motoren 13, 13^{I} haben eine maximale Drehzahl, die z. B. in einem Bereich von 12.000 U/min bis 20.000 U/min liegt. Die übliche Drehgeschwindigkeit an der Antriebswelle sollte aber nur um die 2.000 Umdrehungen/Minute betragen. In diesem Fall wird ein Untersetzungsgetriebe benötigt, das sich in dem Getriebe 11, 11^{I} findet. Das Getriebe 11, 11^{I} befindet sich abtriebsseitig des Motors 13, 13^{I}.

Wie weiterhin aus Figur 1 zu entnehmen ist, setzt sich das Steuerungs- und Sicherheitssystem 31 aus zwei Steuergeräten 19, 21 unterschiedlichen Typs zusammen. Tatsächlich werden insgesamt drei Steuergeräte 19, 19^{I}, 21 verwendet, um ein Einzelradantriebssystem mit ausreichender Sicherheit zu realisieren. Die Steuergeräte 19, 19', 21 weisen jeweils eine Recheneinheit 22, 22^{I}, 22^{II} auf.

In jedem ersten Steuerungsgerät 19, 19^{I} gibt es eine Inverter-Steuerung 33, 35. Die Inverter-Steuerung 33, 35 ist über eine mehradrige Verbindung, zu sehen sind die für drei Phasenanschlüsse vorgesehenen Motorversorgungskabel 25, 25^{I}, mit den Motoren 13, 13^{I} elektrisch verbunden. Die Motoren 13, 13^{I} sind zwei Dreiphasen-Motoren gleicher Bauart.

Zwischen dem Fahrpedal 15 und einem Eingang 41 an dem einen ersten Steuergerät 19 und einem Eingang 43 an dem anderen ersten Steuergerät 19^{I} gibt es zwei Kommunikationskanäle 37, 39, über die eine Fahrpedalstellung des Fahrpedals 15 bzw. eine Leistungsanforderung an die Antriebsstränge 9, 9^{I} an die Steuergeräte 19, 21 übertragbar ist.

Die Steuergeräte 19, 21 erhalten also eine Sollgröße, die aus der Fahrpedalstellung des Fahrpedals 15 abgeleitet werden kann, und berechnen einen Leistungsbetriebspunkt 47, 49 für die Inverter-Steuerung 33, 35. Die errechneten Werte der einzelnen Leistungsbetriebspunkte 47, 49 werden über einen Vergleichskanal 45 zwischen den beiden ersten Steuergeräten 19, 19^{I} miteinander abgeglichen.

Eine ähnliche Berechnung der Leistungsbetriebspunkte 47, 49 findet in dem zweiten Steuergerät 21 statt. Zwischen den ersten Steuergeräten 19, 19^{I} und dem zweiten Steuergerät 21 gibt es einen Datenbus, der sich bei genauerer Betrachtung aus zwei Teilen 23, 23^{I} eines Datenbusses (CAN-Bus) zusammensetzt und über den die gemessenen und berechneten Daten wie die Leistungsbetriebspunkte 47, 49 übertragen werden können. Zum einen gibt es den Datenbus 23 zwischen dem einen ersten Steuergerät 19 und dem zweiten Steuergerät 21 und zum anderen gibt es den Datenbus 23^{I} zwischen dem anderen ersten Steuergerät 19^{I} und dem zweiten Steuergerät 21. Ist der Datenbus 23, 23^{I} ein CAN-Bus, hängen alle Steuergeräte 19, 19^{I}, 21 an dem gleichen Datenbus 23, 23^{I}, der abschnittsweise aus zusammengesteckten Leitungen gebildet ist.

Das zweite Steuergerät 21 ist ein deutlich einfacheres Steuergerät als die beiden ersten Steuergeräte 19, 19^{I}, die die Steuergeräte für Leistungsstromsteuerungen zur Ansteuerung der Motoren 13, 13^{I} sind. Als zweites Steuergerät 21 kommen so einfache Steuergeräte wie Fensterhebersteuergeräte, Gaspedalsteuergeräte oder Steuergeräte für einzelne Sensoren in Betracht. Natürlich kann das zweite Steuergerät 21 auch ein komplexeres Steuergerät sein, wie z. B. ein Steuergerät für das BMS ("battery-management-system").

Die Recheneinheiten 22, 22^{I}, 22^{II} sind jeweils mit einer Software bzw. einem Programm ausgestattet, die bzw. das unter anderem in einem ersten Software-Modul die Bestimmung von geeigneten Leistungsbetriebspunkten für Inverter ermöglicht und in einem zweiten Software-Modul einen Vergleich eines in dem ersten Steuergerät 19 berechneten Leistungsbetriebspunkts mit einem in dem anderen Steuergerät 19^{I} oder einem zweiten Steuergerät 21 berechneten zweiten Leistungsbetriebspunkt ermöglicht und damit u. a. dem Auffinden von Fehlern zur Verbesserung der Betriebssicherheit der Steuerung dient.

Die ersten Steuergeräte 19, 19^{I} beheimaten jeweils mindestens ein Sicherheitsmodul 51, 53, das z. B. durch ein (Software-)Programm geschaffen ist.

Das erste Steuergerät 19 bildet mit dem ersten Inverter 33 eine Einbaugruppe. Das andere erste Steuergerät 19^{I} bildet mit dem zweiten Inverter 35 eine Einbaugruppe.

In den Figuren Figur 2, Figur 3, Figur 4, Figur 5 und Figur 6 sind weitere Ausführungsbeispiele von Kraftfahrzeugen 101, 201, 301, 401, 501 gezeigt, die wie das in Figur 1 gezeigte Kraftfahrzeug 1 jeweils vier Räder (ohne Bezugszeichen) haben. Die Kraftfahrzeuge 101, 201, 301, 401, 501 sind jeweils mit einer ersten Achse 103, 203, 303, 403, 503 und einer zweiten Achse 105, 205, 305, 405, 505 ausgestattet, wobei mit Hilfe eines Gaspedalsensors 161, 261, 361, 461, 561 des Kraftfahrzeugs 101, 201, 301, 401, 501 Energie aus einem Energiespeichersystem 117, 217, 317, 417, 517 für den Antrieb abrufbar ist. Die Steuerungsund Sicherheitssysteme 131, 231, 331, 431, 531 weisen jeweils einen ersten Datenbus 123, 223, 323, 423, 523 auf, an den eine Gangwahl-Einheit 155, 255, 355, 455, 555, eine Auswahleinheit für den Antriebsmodus 157, 257, 357, 457, 557 und ein weiteres Steuermodul 159, 259, 359, 459, 559 angeschlossen sind sowie einen zweiten Datenbus 123^{I}, 423^{I}, 523^{I}, an den eine Brems-Steuereinheit 163, 263, 363, 463, 563 im Verbund mit einer Antriebsassistenz-Steuereinheit 165, 265, 365, 465, 565 und eine inertiale Messeinheit 167, 267, 367, 467, 567 sowie eine Lenkwinkel-Sensoreinheit 169, 269, 369, 469, 569 angeschlossen sind. Von dem Gaspedalsensor 161, 261, 361, 461, 561 führt ein erster Kommunikationskanal 137, 237, 373, 437, 537 zu einem ersten Steuergerät 119, 219, 319, 419, 519. Ein zweiter Kommunikationskanal 139, 239, 339, 439, 539 führt zu einem zweiten Steuergerät 119', 220, 319', 419', 519'.

Gemäß Figur 2 sind der zweiten Achse 105 ein erster Antriebsstrang 109 und ein zweiter Antriebsstrang 109^{I} zugeordnet, wobei zu dem ersten Antriebstrang 109 ein erstes Getriebe 111, ein erster Elektromotor 113 und ein erstes Steuergerät 119 gehören. Zu dem zweiten Antriebsstrang 109^{I} gehören ein zweites Getriebe 111^{I}, ein zweiter Elektromotor 113 und ein zweites Steuergerät 119^{I}.

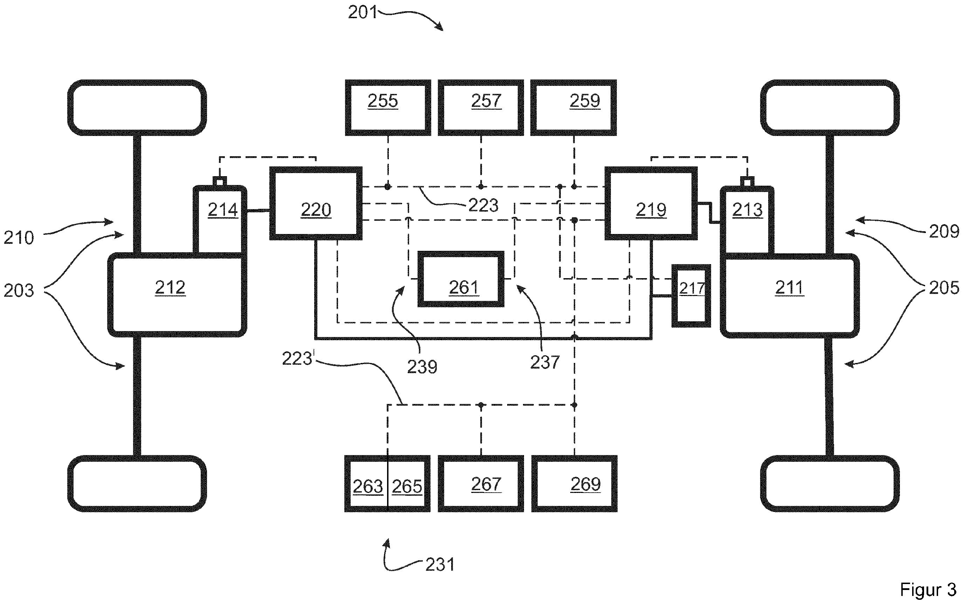

Gemäß Figur 3 ist eine zweite Achse 205 von einem einzelnen Antriebsstrang 209, der ein Getriebe 211 und einen Elektromotor 213 umfasst, antreibbar. Der Elektromotor 213 ist über ein erstes Steuergerät 219 mit Betriebsstrom versorgbar. An der ersten Achse 203 befindet sich ein zweiter Antriebstrang 210 für die Räder. Ein Getriebe 212 des Antriebsstrangs 210 untersetzt die Drehungen eines Elektromotors 214, wobei der Elektromotor 214 durch ein zweites Steuergerät 220 betreibbar ist bzw. betrieben wird. Das erste Steuergerät 219 und das zweite Steuergerät 220 können nach Bedarf jeweils den Strom für den elektromotorischen Antrieb aus dem Energiespeichersystem 217 beziehen und in geeigneter Phasenlage bereitstellen.

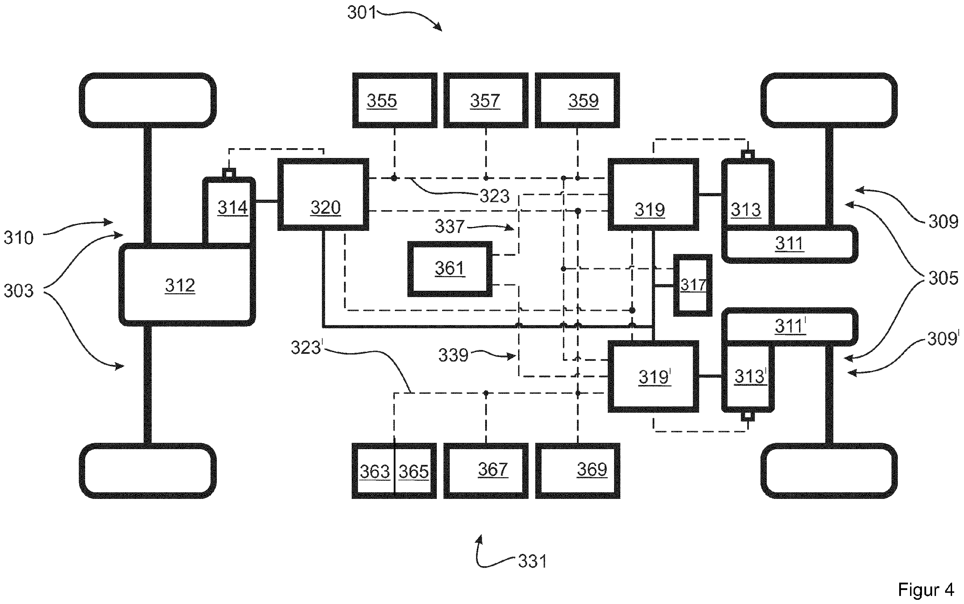

Gemäß Figur 4 wird die zweite Achse 305, ähnlich wie die zweite Achse 105 gem. Figur 2, über zwei Antriebsstränge 309, 309^{I} angetrieben. Zu den Antriebssträngen 309, 309^{I} gehören jeweils ein Getriebe 311, 311' und ein Elektromotor 313, 313^{I}. Außerdem sind miteinander gekoppelte Steuergeräte 319, 319^{I} für die Elektromotoren 313, 313^{I} vorhanden. Zusätzlich, im Vergleich zu Figur 2, ist bei dem in Figur 4 gezeigten Kraftahrzeug 301 an der ersten Achse 303 ebenfalls ein Antriebsstrang 310 vorhanden, der auch als dritter Antriebsstrang 310 bezeichnet werden kann. Im dritten Antriebsstrang 310 ist über Abtriebswellen (ohne Bezugszeichen) von einem Getriebe 312 ein Drehmoment ausbringbar, das durch eine angesteuerte Elektromaschine 314 bereitgestellt werden kann. Die Elektromaschine 314 dient der Erzeugung eines Drehmoments oder auch zum Erreichen einer gewünschten Fahrgeschwindigkeit. Die Elektromaschine 314 kann auch zur Rekuperation von Energie aus einem Drehmoment, das über das Getriebe 312 auf die Elektromaschine 314 einwirkt, genutzt werden. Zum Betrieb der Elektromaschine 314 dient ein zweites Steuergerät 320. Je nach Zählweise kann jenes zweite Steuergerät 320 auch als drittes Steuergerät bezeichnet werden, z. B. wenn eines der beiden anderen Steuergeräte 319, 319^{I} als zweites Steuergerät dient. Demnach kann z. B. vorteilhafterweise von zwei zweiten Steuergeräten 319^{I}, 320 gesprochen werden, von denen die in dem ersten Steuergerät 319 ausgeführten Berechnungen (in redundanter Weise) auf Plausibilität überprüfbar sind, insbesondere wenn eines der Steuergeräte 319, 319^{I}, 320 Ergebnisse liefert, die als nicht plausibel zu gelten haben.

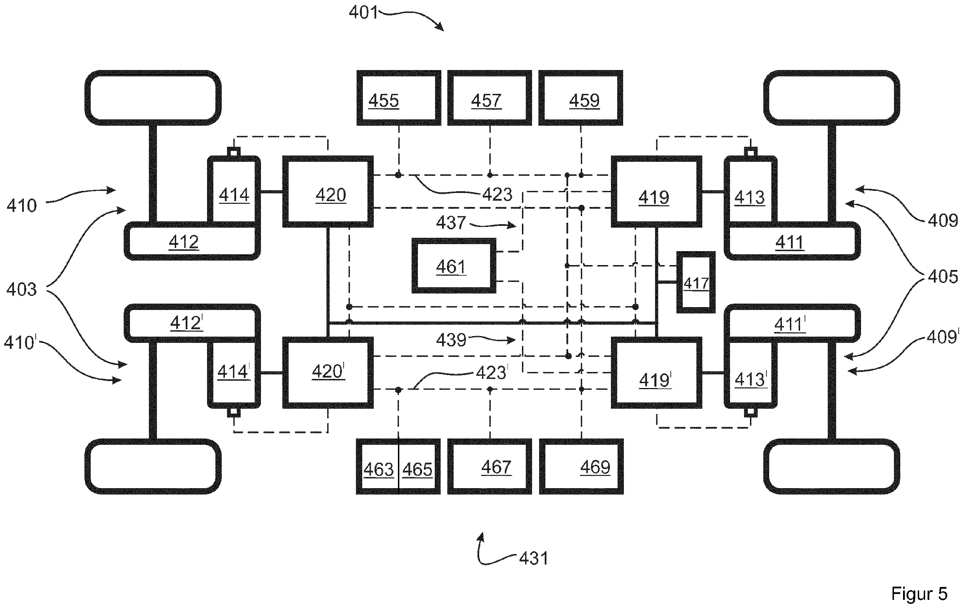

Bei dem in Figur 5 gezeigten Kraftfahrzeug 401 sind einer ersten Achse 403 zwei Antriebsstränge 410, 410^{I} mit jeweiligem Getriebe 412, 412^{I} und jeweiligem Elektromotor 414, 414^{I} sowie zugehörigem Steuergerät 420, 420^{I} zugeordnet. Je nach Zählweise kann einer jener Antriebsstränge 410 als dritter Antriebsstrang bezeichnet werden, der dritte Komponenten aufweist. Für diesen ist ein drittes Steuergerät 420 zuständig. Der andere Antriebsstrang 410^{I}, kann als vierter Antriebstrang bezeichnet werden, der vierte Komponenten aufweist. Für diesen ist ein viertes Steuergerät 420^{I} zuständig. Ähnlich zu der Antriebsanordnung des Kraftfahrzeugs 101, das in Figur 2 dargestellt ist, befinden sich bei dem Kraftfahrzeug 401 gem. Figur 5 an der zweiten Achse 405 ein erster Antriebsstrang 409 und ein zweiter Antriebsstrang 409^{I}. Folglich sind vier Antriebsstränge 409, 409^{I} 410, 410^{I} vorhanden, die alle motorisch und getriebetechnisch unabhängig voneinander auf die jeweilige Fahrsituation abgestimmt ansteuerbar sind. Der erste Antriebsstrang 409 führt Antriebsenergie aus einem ersten Steuergerät 419 gewandelt in einen ersten Elektromotor 413. Die Antriebsleistung wird durch ein erstes Getriebe 411 einem ersten Rad der Achse 405 zu dessen Einzelradantrieb zugeführt. Ein zweites Steuergerät 419^{I} führt Energie, gewandelt über einen zweiten Elektromotor 413^{I} und ein zweites Getriebe 411^{I}, der zweiten Achse 405 für einen Einzelradantrieb zu. Somit handelt es sich bei dem Kraftfahrzeug 401 um ein vollständig einzelradangetriebenes Kraftfahrzeug. Alle Steuergeräte 419, 419^{I}, 420, 420^{I} können mit Hilfe des ersten Datenbusses 423 und des zweiten Datenbusses 423^{I} miteinander kommunizieren. Die elektrische Energie bzw. der elektrische Strom für alle Steuergeräte 419, 419^{I}, 420, 420^{I} stammt aus dem Energiespeichersystem 417.

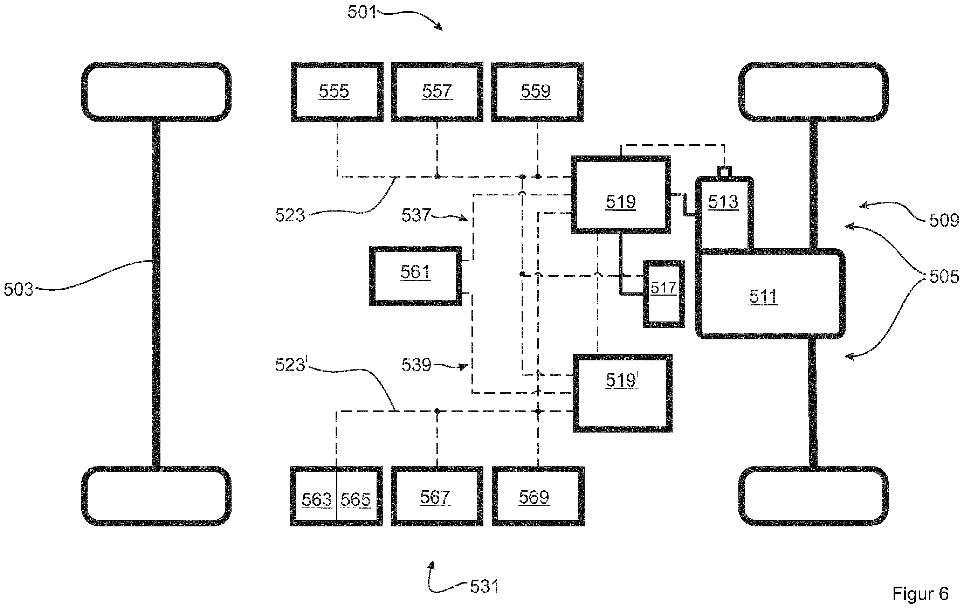

Das Kraftfahrzeug 501, das in Figur 6 zu sehen ist, weist nur einen einzigen Antriebsstrang 509 auf, der der zweiten Achse 505 ein Drehmoment zuführen kann. Ein erstes Steuergerät 519 ist elektrisch mit einem Energiespeichersystem 517 und dem Elektromotor 513 verbunden, wobei der Elektromotor 513 dem Antrieb des Getriebes 511 dient. Außer dem ersten Steuergerät 519 weist das Kraftfahrzeug 501 ein redundantes, zweites Steuergerät 519^{I} auf, das in einem Fehlerfall die Steuerfunktion des ersten Steuergeräts 519 übernehmen kann. Die Steuergeräte 519, 519^{I} sind jeweils an den ersten Datenbus 523 und an den zweiten Datenbus 523^{I} angeschlossen. Außerdem werden die Steuergeräte 519, 519^{I} jeweils über einen Kommunikationskanal 537, 539 mit Daten des Gaspedalsensors 561 versorgt.

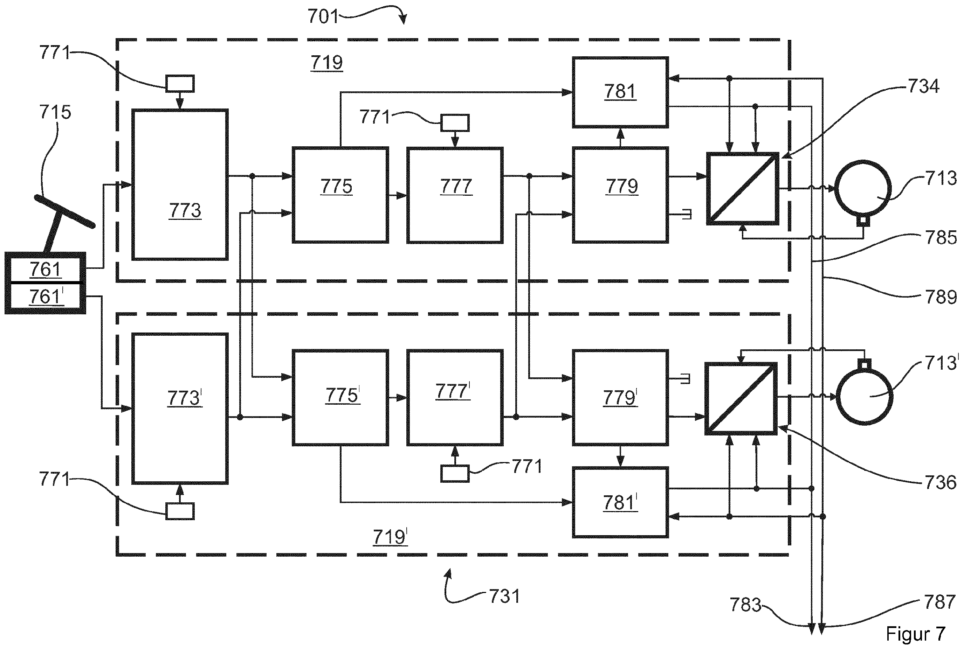

In Figur 7 ist für das Kraftahrzeug 701, das ein Steuerungs- und Sicherheitssystem 731 aufweist, eine Konfiguration eines ersten Steuergeräts 719 und eines zweiten Steuergeräts 719^{I} gezeigt. Das erste Steuergerät 719, zu dem ein erster Inverter 734 gehört, dient primär dem Antrieb eines ersten Elektromotors 713. Das zweite Steuergerät 719^{I}, zu dem ein zweiter Inverter 736 gehört, dient primär dem Antrieb eines zweiten Elektromotors 713^{I}. Über eine Fahrgeschwindigkeitseingabevorrichtung 715 wird aus einem zur Vorrichtung 715 gehörenden Sensor heraus dem ersten Steuergerät 719 und dem zweiten Steuergerät 719^{I} jeweils ein Signal einer Drehmomentenanforderung zugeführt. Außerdem liegen in den Steuergeräten 719, 719^{I} weitere Datenpakete 771 mit Steuersignalen, wie sensorisch erhobene und per Bus bereitgestellte Daten, u. a. aus den Motoren 713, 713^{I} sowie aus einer Fahrstabilitätssensorik vor. In einem Verfahren zur Steuerung des Antriebsstrangs erfolgt anhand jener Daten bzw. Signale bzw. Steuersignale eine Berechnung eines Antriebsmoments 773, 773^{I}, in die eine Eingabe am Gaspedalsensor und ein erforderliches Giermoment in jedes der Steuergeräte 719, 719^{I} eingehen. Anders gesagt, erfolgt beim ersten Steuergerät 719 eine Berechnung aus einer Eingabe am ersten Gaspedalsensor 761. Im zweiten Steuergerät 719^{I} findet eine Berechnung aus einer Eingabe am zweiten Gaspedalsensor 761^{I} statt. Jene Berechnungen 773, 773' werden anschließend in dem ersten Steuergerät 719 und in dem zweiten Steuergerät 719^{I} kreuzweise einer Plausibilitätsprüfung 775, 775^{I} unterzogen. Mit dem Wort "kreuzweise" wird gesagt, dass das erste Steuergerät 719 die Plausibilität des Ergebnisses der Berechnungen des zweiten Steuergeräts 719^{I} prüft und das zweite Steuergerät 719^{I} die Plausibilität der Berechnung des ersten Steuergeräts 719 prüft. Nach der Plausibilitätsprüfung 775, 775^{I} kann unmittelbar die Initiierung eines sicheren Betriebszustands des Antriebsystems 781, 781^{I} erfolgen. An die Plausibilitätsprüfung 775, 775^{I} kann im Anschluss eine Berechnung einer Drehmomentbegrenzung und einer Drehmomentaufteilung 777, 777^{I} in dem ersten Steuergerät 719 und in dem zweiten Steuergerät 719^{I} erfolgen. Nach jenen Berechnungen 777, 777' sind wieder eine kreuzweise Überprüfung beider Berechnungsergebnisse in einer kreuzweisen, doppelten Plausibilitätsprüfung 779, 779^{I} der Drehmomentbegrenzung und Drehmomentaufteilung durch das erste Steuergerät 719 und das zweite Steuergerät 719^{I} möglich. Nach der Plausibilitätsprüfung 779, 779' erfolgt die Ansteuerung der Inverter 734, 736 mit einer Vorgabe eines jeweiligen Leistungsbetriebspunkts. Nach Eintritt in einen sicheren Betriebszustands der Steuerung des Antriebssystems 781, 781^{I} bei einem zuvor aufgetretenen Fehlerfall wird eine Zusammenarbeit mit weiteren Steuergeräten 787 mit Hilfe einer SoftwareSperre 789 gehemmt. Außerdem kann im Fehlerfall für die Einnahme eines sicheren Betriebszustands ein Signal für eine Hardware-Sperre 785 an den Invertern 734, 736 sowie an weiteren Antriebseinheiten 783 übermittelt werden.

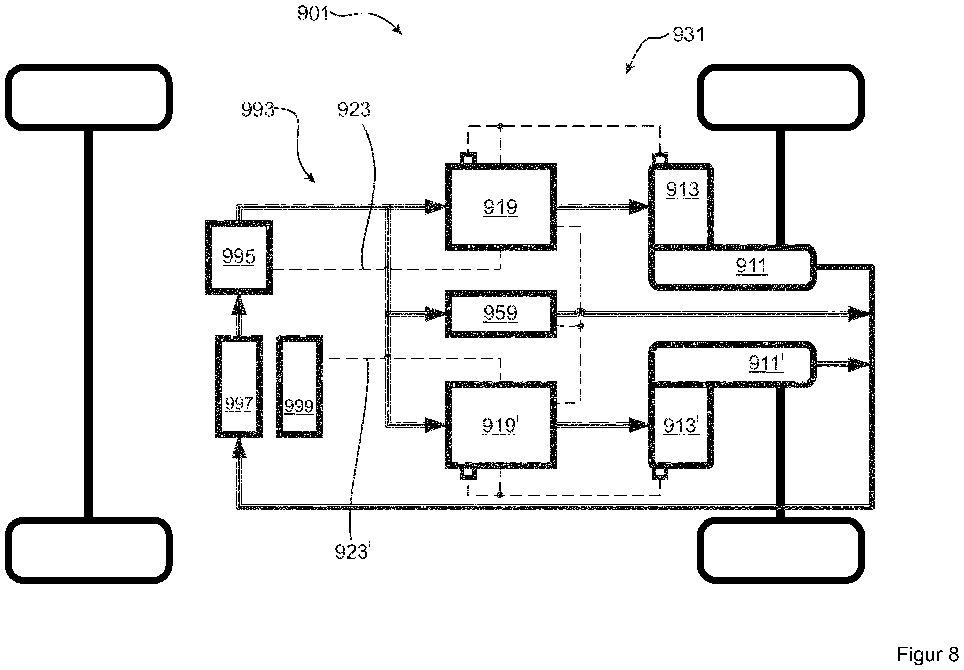

Ein in Figur 8 gezeigtes Steuerungs-Sicherheitssystem 931 eines Kraftfahrzeugs 901 weist ein Kühlsystem 993 auf. Zu dem Kühlsystem 993 gehören eine Kühlmittelpumpe 995 und ein Wärmetauscher 997 mit einem Lüfter 999. Der Lüfter 999 und die Pumpe 995 sind über Datenbusse 923, 923' ansteuerbar, wobei die Steuerbefehle aus den Steuergeräten 919, 919^{I} stammen. In einem Kühlmittelkreislauf der durch das Kühlsystem 993 gebildet ist, können die vom Kühlsystem 993 mit Kühlflüssigkeit versorgten Steuergeräte 919, 919^{I}, weitere Einheiten 959 sowie die den Steuergeräten 919, 919^{I} jeweils nachgeordneten Elektromotoren 913, 913^{I} und deren jeweils zugehöriges Getriebe 911, 911^{I} bedarfsgerecht gekühlt werden.

Die in den Figuren gezeigten Ausgestaltungsmöglichkeiten lassen sich auch mit den in der allgemeinen Erfindungsbeschreibung stehenden weiteren Ausgestaltungen in beliebiger Form kombinieren.

Beispielsweise ist es auch möglich, jedes Steuergerät aus einem eigenen, zugeordneten Akkumulator (vgl. die Akkumulatoren 17, 17^{I} gem. Figur 1) mit Strom zu versorgen, wobei ein erster Akkumulator für ein erstes Steuergerät von einem zweiten Akkumulator für ein zweites Steuergerät elektrisch getrennt ist. Mit automatisch wählbarer Versorgung aus dem jeweiligen Akkumulator über einen Stromversorgungswechselschalter kann eine Stromversorgung des ersten Steuergeräts und des zweiten Steuergeräts sichergestellt werden. Ein defekter Akkumulator kann von dem Steuersystem unter Beibehaltung aller Steuerfunktionen isoliert werden. Durch Redundanz bei der Stromversorgung wird somit eine Betriebssicherheit noch weiter verbessert.

Nach einem anderen Aspekt kann auch ein Kühlsystem, das in Figur 8 gezeigt ist, mit Redundanz durch zwei separate Kreisläufe und/oder mit Redundanz bei der Ansteuerung der Pumpe(n) und/oder der Lüfter ausgelegt sein. Zwei Steuergeräte können jeweils ihre Berechnung eines Kühlbedarfs zur Erzeugung von Steuersignalen für die Einstellung einer Pumpleistung bzw. Pumpendrehzahl oder einer Lüfterdrehzahl wechselseitig überprüfen. Berechnungen zur Generierung von Steuersignalen erfolgen z. B. anhand von einem oder von mehreren Temperaturmesswerten, geliefert von Thermosensoren über einen Bus. Thermosensoren sind u. a. an oder in den Elektromotoren und den Invertern vorhanden. In jene Berechnungen geht vorteilhaft auch mindestens ein Sensorsignal ein, das von einer Drehmomentenanforderung an einer Fahrgeschwindigkeitseingabevorrichtung ausgeht. Damit kann eine Kühlleistung des Kühlsystems frühzeitig hochgefahren oder heruntergefahren werden und eine Betriebstemperatur von Motor(en) und Leistungselektronik(en) ist in einem engeren Solltemperaturintervall stabilisierbar.

**Bezugszeichenliste**

| | |
|---|---|
| 1, 101, 201, 301, 401, 501, 701, 901 | Kraftfahrzeug |
| 3, 103, 203, 303, 403, 503 | erste Achse |
| 5, 105, 205, 305, 405, 505 | zweite Achse |
| 7, 7^{I}, 7^{II}, 7^{III} | Rad |
| 9, 9^{I}, 109, 109^{I}, 209, 309, 309^{I}, 409, 409^{I}, 509 | Antriebsstrang |
| 210, 310, 410, 410^{I} | Antriebsstrang, insbesondere zweiter Antriebsstrang |
| 11, 11^{I}, 111, 111^{I}, 211, 311, 311^{I}, 411, 411^{I}, 511, 911, 911^{I} | Getriebe |
| 212, 312, 412, 412^{I}, | Getriebe |
| 13, 13^{I}, 113, 113^{I}, 213, 313, 313^{I}, 413, 413^{I}, 513, 713, 713', 913, 913^{I} | Elektromotor |
| 314 | Elektromaschine, insbesondere Motor |
| 15, 715 | Fahrgeschwindigkeitseingabevorrichtung, insbesondere Fahrpedal |
| 17, 17', 117, 217, 317, 417, 517 | Energiespeichersystem, insbesondere elektrochemischer Speicher |
| 19, 19', 119, 219, 319, 419, 519, 719, 919 | erstes Steuergerät, wie ein erstes Invertersteuergerät |
| 119^{I}, 319^{I}, 420^{I}, 719^{I}, 919^{I} | zweites Steuergerät, wie ein zweites Invertersteuergerät |
| 220, 320, 420, 519^{I} | zweites Steuergerät |
| 21 | zweites Steuergerät, wie ein Hochspannungssteuergerät |
| 22, 22^{I}, 22^{II} | Recheneinheit |
| 23, 23^{I}, 123, 123^{I}, 223, 223^{I}, 323, 323^{I}, 423, 423^{I}, 523, 523^{I}, 923, 923^{I} | Datenbus |
| 25, 25^{I} | Motorversorgungskabel |
| 31, 131, 231, 331, 431, 531, 731, 931 | Steuerungs- und Sicherheitssystem |
| 33 | Invertersteuerung |
| 734 | Inverter, insbesondere erster Inverter |
| 35 | Invertersteuerung |
| 736 | Inverter, insbesondere zweiter Inverter |
| 37, 137, 237, 337, 437, 537 | erster Kommunikationskanal |
| 39, 139, 239, 339, 439, 539 | zweiter Kommunikationskanal |
| 41 | Eingang, insbesondere des ersten Steuergeräts |
| 43 | Eingang, insbesondere des zweiten Steuergeräts |
| 45 | Vergleichskanal |
| 47 | erster Leistungsbetriebspunkt |
| 49 | zweiter Leistungsbetriebspunkt |
| 51 | Sicherheitsmodul |
| 53 | Sicherheitsmodul |
| 155, 255, 355, 455, 555 | Gangwahl-Einheit, vorzugsweise im Verbund als Fahrzeugsteuergerät |
| 157, 257, 357, 457, 557 | Auswahleinheit Antriebsmodus, wie ein Fahrkomfort-Steuergerät |
| 159, 259, 359, 459, | weitere Einheit, insbesondere weiteres Steuermodul, wie Kombigerät |
| 559, 959 | als Fensterhebersteuergerät und Batterie-Management-Steuergerät |
| 161, 261, 361, 461, | Sensor, insbesondere erster Gaspedal Sensor im Verbund als ein |
| 561, 761 | Gaspedalsteuergerät |
| 761^{I} | Sensor, insbesondere zweiter Gaspedal Sensor im Verbund mit einem Gaspedalsteuergerät |
| 163, 263, 363, 463, | Bremsen-Steuereinheit, vorzugsweise als Steuergerät ausgebildet, |
| 563 | wie ein Body-Control-Unit-Steuergerät |
| 165, 265, 365, 465, | Antriebsassistenz-Steuerungseinheit, insbesondere |
| 565 | Elektromotorsteuergerät |
| 167, 267, 367, 467, | inertiale Messeinheit, insbesondere Beschleunigungssensoren und |
| 567 | Drehratensensor im Verbund als Body-Control-Unit-Steuergerät |
| 169, 269, 369, 469, | Lenkwinkel-Sensoreinheit, vorzugsweise im Verbund als |
| 569 | Fahrzeugsteuergerät |
| 771 | Datenpaket, insbesondere Steuersignale |
| 773, | Berechnung eines Antriebsmoments aus einer Eingabe am ersten Gaspedal-Sensor und einem erforderliche Giermoment, |
| 773^{I} | Berechnung eines Antriebsmoments aus einer Eingabe am zweiten Gaspedal-Sensor und einem erforderlichen Giermoment, |
| 775, 775^{I} | Plausibilitätsprüfung des angeforderten Antriebsmoments und des erforderlichen Giermoments |
| 777, 777^{I} | Berechnung der Drehmomentbegrenzung und der Drehmomentaufteilung |
| | |
| 779, 779^{I} | Plausibilitätsprüfung der Drehmomentbegrenzung und der Drehmomentaufteilung |
| 781, 781^{I} | Initiierung eines sicheren Betriebszustands des Antriebssystems |
| 783 | weitere Antriebseinheiten, insbesondere dritte und vierte Antriebseinheiten |
| 785 | Hardwaresperre, insbesondere Sperrsignal für eine Hardware |
| 787 | weiteres Steuergerät, insbesondere weitere Steuergeräte |
| 789 | Softwaresperre, insbesondere Sperrsignal für eine Software |
| 993 | Kühlsystem, insbesondere Kühlkreislauf |
| 995 | Kühlmittelpumpe |
| 997 | Wärmetauscher |
| 999 | Ventilator |

## Patentansprüche

1. Verteiltes Steuerungs- und Sicherheitssystem (31, 131, 231, 331, 431, 531, 731, 931) für ein Kraftfahrzeug (1, 101, 201, 301, 401, 501, 701, 901),
insbesondere für seinen Antriebsstrang (9, 9^{I}, 109, 109^{I}, 209, 309, 309^{I}, 409, 409^{I}, 509, 210, 310, 410, 410^{I}) mit einem Elektromotor (13, 13^{I}, 113, 113^{I}, 213, 313, 313^{I}, 413, 413^{I}, 513, 713, 713^{I}, 913, 913^{I}, 314) und einem elektrochemischen Speicher (17, 17^{I}, 117, 217, 317, 417, 517) oder Konverter,
das eine Fahrgeschwindigkeitseingabevorrichtung (15, 715) und/oder eine Antriebsmomenteneingabevorrichtung wie ein Fahrpedal (15, 715), ein Fahrbetätigungshebel oder eine Geschwindigkeitssteuerung besitzt und
das einem Mindestsicherheitsniveau wie z. B. ASIL-C oder ASIL-D entspricht,
mit zumindest einem ersten Steuergerät (19, 19^{I}, 119, 219, 319, 419, 519, 719, 919) und mit einem zweiten Steuergerät (119^{I}, 319^{I}, 420^{I}, 719^{I}, 919^{I}, 220, 320, 420, 519^{I}, 21) und mit wenigstens einem ersten Inverter (33, 734),
wobei das erste Steuergerät (19, 19^{I}, 119, 219, 319, 419, 519, 719, 919) Teil einer Steuerung des ersten Inverters (33, 734) ist,
und wobei das Steuerungs- und Sicherheitssystem (31, 131, 231, 331, 431, 531, 731, 931) wenigstens zwei Kommunikationskanäle (37, 137, 237, 337, 437, 537, 39, 139, 239, 339, 439, 539) umfasst, über die jeweils eine eigene Stellinformation der Fahrgeschwindigkeitseingabevorrichtung (15,715) und/oder der Antriebsmomenteneingabevorrichtung an wenigstens eines der Steuergeräte (19, 19^{I}, 119, 219, 319, 419, 519, 719, 919, 119^{I}, 319^{I}, 420^{I}, 719^{I}, 919^{I}, 220, 320, 420, 21) übertragbar ist,
**dadurch gekennzeichnet, dass**
jedes der beiden Steuergeräte (19, 19^{I}, 119, 219, 319, 419, 519, 719, 919, 119^{I}, 319^{I}, 420^{I}, 719^{I}, 919^{I}, 220, 320, 420, 21) derart gestaltet ist,
dass es einen Eingang (41, 43) umfasst, über den das jeweilige Steuergerät (19, 19^{I}, 119, 219, 319, 419, 519, 719, 919, 119^{I}, 319^{I}, 420^{I}, 719^{I}, 919^{I}, 220, 320, 420, 21) von wenigstens einem der Kommunikationskanäle (37, 137, 237, 337, 437, 537, 39, 139, 239, 339, 439, 539) eine der Stellinformationen der Fahrgeschwindigkeitseingabevorrichtung (15, 715) und/oder der Antriebsmomenteneingabevorrichtung aufnehmen kann,
und dass es eine Recheneinheit (22, 22^{I}, 22^{II} ) umfasst,
die für eine Bestimmung eines ersten elektrischen Leistungsbetriebspunkts (47) für den wenigstens einen Inverter (33, 734, 35, 736) gestaltet ist und
die für einen Vergleich mit einem in dem jeweils anderen Steuergerät (119', 319', 420', 719', 919', 220, 320, 420, 21, 19, 19^{I}, 119, 219, 319, 419, 519, 719, 919) berechneten zweiten Leistungsbetriebspunkt (49) gestaltet ist,
wobei unmittelbar nach einer Abweichung zwischen bestimmtem ersten Leistungsbetriebspunkt (47) und verglichenem zweiten Leistungsbetriebspunkt (49) sich das Steuerungs- und Sicherheitssystem (31, 131, 231, 331, 431, 531, 731, 931) in einem Sicherheitszustand befindet,
der dem Mindestsicherheitsniveau entspricht.

2. Verteiltes Steuerungs- und Sicherheitssystem (31, 131, 231, 331, 431, 531, 731, 931) nach Anspruch 1,
**dadurch gekennzeichnet, dass**
jedes Steuergerät des Steuerungs- und Sicherheitssystems (31, 131, 231, 331, 431, 531, 731, 931) ein Sicherheitsniveau einhält, das niedriger angesiedelt ist als das Mindestsicherheitsniveau des verteilten Steuerungs- und Sicherheitssystems (31, 131, 231, 331, 431, 531, 731, 931).

3. Verteiltes Steuerungs- und Sicherheitssystem (31, 131, 231, 331, 431, 531, 731, 931) nach einem der vorhergehenden Ansprüche,
**dadurch gekennzeichnet, dass**
das Steuerungs- und Sicherheitssystem (31, 131, 231, 331, 431, 531, 731, 931) ohne zentrales Fahrzeugsteuergerät durch mehr als zwei Steuergeräte (119^{I}, 319^{I}, 420^{I}, 719^{I}, 919', 220, 320, 420, 21, 19, 19^{I}, 119, 219, 319, 419, 519, 719, 919; 159, 259, 359, 459, 559; 163, 263, 363, 463, 563; 165, 265, 365, 465, 565) aufgebaut ist,
wodurch vorzugsweise ein Steuerungs- und Sicherheitssystem (31, 131, 231, 331, 431, 531, 731, 931) gebildet ist,
das keine übergeordnete Steuergeräteinstanz, z. B. durch ein Hauptfahrzeugsteuergerät, aufweist.

4. Verteiltes Steuerungs- und Sicherheitssystem (31, 131, 231, 331, 431, 531, 731, 931) nach einem der vorhergehenden Ansprüche,
**dadurch gekennzeichnet, dass**
in dem Steuerungs- und Sicherheitssystem (31, 131, 231, 331, 431, 531, 731, 931) als Ganzes der Sicherheitszustand des Mindestsicherheitsniveaus herbeiführbar ist.

5. Verteiltes Steuerungs- und Sicherheitssystem (31, 131, 231, 331, 431, 531, 731, 931) nach einem der vorhergehenden Ansprüche,
**dadurch gekennzeichnet, dass**
ein zweiter Inverter (35, 736) zu dem Steuerungs- und Sicherheitssystem (31, 131, 231, 331, 431, 531, 731, 931) gehört, der durch ein eigenes Steuergerät (19^{I}, 719^{I}) gesteuert wird.

6. Verteiltes Steuerungs- und Sicherheitssystem (31, 131, 231, 331, 431, 531, 731, 931) nach einem der vorhergehenden Ansprüche,
**dadurch gekennzeichnet, dass**
der Antriebsstrang (9, 9^{I}, 109, 109^{I}, 209, 309, 309^{I}, 409, 409^{I}, 509, 210, 310, 410, 410^{I}) für zwei Einzelradantriebe oder einen Achsantrieb gestaltet ist.

7. Verteiltes Steuerungs- und Sicherheitssystem (31, 131, 231, 331, 431, 531, 731, 931) nach einem der vorhergehenden Ansprüche,
**dadurch gekennzeichnet, dass**
jedes Steuergerät ausgewählt ist aus der folgenden Gruppe, umfassend Fahrzeugsteuergerät (157, 257, 357, 457, 557; 169, 269, 369, 469, 569), Invertersteuergerät (119', 319^{I}, 420^{I}, 719^{I}, 919^{I}, 220, 320, 420, 19, 19^{I}, 119, 219, 319, 419, 519, 719, 919), Hochspannungssteuergerät (21), Batterie-Management-Steuergerät (159, 259, 359, 459, 559, 959), Body-Control-Unit-Steuergerät (163, 263, 363, 463, 563; 167, 267, 367, 467, 567), Fahrkomfort-Steuergerät (157, 257, 357, 457, 557), Elektromotorsteuergerät (165, 265, 365, 465, 565), Gaspedalsteuergerät (161, 261, 361, 461, 561, 761) und Fensterhebersteuergerät (159, 259, 359, 459, 559, 959), wobei das erste und das zweite Steuergerät voneinander verschieden sind.

8. Verfahren zur Steuerung eines Antriebsstrangs (9, 9^{I}, 109, 109^{I}, 209, 309, 309^{I}, 409, 409^{I}, 509, 210, 310, 410, 410^{I}) eines Kraftfahrzeugs (1, 101, 201, 301, 401, 501, 701, 901)
mit wenigstens einem Elektromotor (13, 13^{I}, 113, 113^{I}, 213, 313, 313^{I}, 413, 413^{I}, 513, 713, 713^{I}, 913, 913^{I}, 314),
mit wenigstens einem Inverter (33, 35, 734, 736),
mit wenigstens einem elektrochemischen Speicher (17, 17^{I}, 117, 217, 317, 417, 517) oder Konverter,
mit wenigstens einem ersten Steuergerät (19, 19^{I}, 119, 219, 319, 419, 519, 719, 919) und
mit wenigstens einem zweiten Steuergerät (119^{I}, 319^{I}, 420^{I}, 719^{I}, 919^{I}, 220, 320, 420, 21),
**dadurch gekennzeichnet, dass**
eine Berechnung eines Leistungsbetriebspunkts (47, 49) des Antriebsstrangs (9, 9^{I}, 109, 109^{I}, 209, 309, 309^{I}, 409, 409^{I}, 509, 210, 310, 410, 410^{I}),
insbesondere des wenigstens einen Elektromotors /13, 13^{I}, 113, 113^{I}, 213, 313, 313^{I}, 413, 413^{I}, 513, 713, 713^{I}, 913, 913^{I}, 314) im Antriebsstrang (9, 9^{I}, 109, 109^{I}, 209, 309, 309^{I}, 409, 409^{I}, 509, 210, 310, 410, 410^{I}),
durch eine Dekomposition von sicherheitsrelevanten Berechnungsschritten auf das erste Steuergerät (19, 19^{I}, 119, 219, 319, 419, 519, 719, 919) und auf das zweite Steuergerät (119^{I}, 319^{I}, 420^{I}, 719^{I}, 919^{I}, 220, 320, 420, 519^{I}, 21) mit anschließender Komposition zweier Einzelbetriebspunkte in ein den Leistungsbetriebspunkt (47, 49) übertragendes Steuersignal, z. B. durch ein CAN-Bus-Telegramm, an den Inverter (33, 35, 734, 736) erfolgt.
